# EUROPEAN PATENT SPECIFICATION

(11) **EP 1 564 116 B1**
(45) Date of publication and mention of the grant of the patent: **17.12.2008**
(21) Application number: 03758137.8
(22) Date of filing: 23.10.2003
(51) Int. Cl.: B62D 37/04, B62D 49/08

(54) **TRACTOR STABILISING SYSTEM**
STABILISIERUNGSSYSTEM FÜR TRAKTOREN
SYSTEME DE STABILISATION POUR TRACTEURS

(30) Priority: 14.11.2002 ES 200202614
(43) Date of publication of application: 17.08.2005
(73) Proprietor: Val Grasa, Jesus Manuel, 50014 Zaragoza (ES)
(72) Inventor: Saiz Rios, Francisco, 50014 Zaragoza (ES); Val Grasa, Jesus Manuel, 50014 Zaragoza (ES)
(74) Representative: Ungria Lopez, Javier
(86) International application number: PCT/ES2003/000539
(87) International publication number: WO 2004/043771

(56) References cited:
- EP-A- 0 083 146
- EP-A- 0 387 927
- DE-U- 29 811 468
- FR-A- 2 452 859
- US-A- 3 944 252
- US-A- 4 093 259
- PATENT ABSTRACTS OF JAPAN vol. 16, no. 119 17 December 1991 & JP 03 286 040 A (TOYO UMPANKI) 25 March 1992
- PATENT ABSTRACTS OF JAPAN vol. 16, no. 119 17 December 1991 & JP 03 286 038 A (TOYO UMPANKI) 25 March 1992
- PATENT ABSTRACTS OF JAPAN vol. 199, no. 710 17 June 1997 & JP 09 154 354 A (ISEKI AGRICULT. MACH.) 17 June 1997
- PATENT ABSTRACTS OF JAPAN vol. 3, no. 149 01 March 1979 & JP 54 027 121 A (KUBOTA) 26 April 1979

## Description

### OBJECT OF THE INVENTION

As expressed in the title of the present specification, the following invention refers to a stabilizing system for tractors, which is preferably useful in four-wheel drive tractors for agricultural use. In the front part, these tractors have a support for mounting and fastening inertial mass, in such a way that the system comprises a first body that is fastened to the front support of the tractor connects to a second support body of inertial mass, by means of at least one rotating arm connected rotatably to the first body and at least one elastic part connected rotatably to both.

In this way, the tractor is provided with front inertial mass provided with oscillatory rotating movement, by means of which, when the mass is more shifted with regard to the front shaft, the front drive improves. Besides, it makes it possible to absorb the force transmitted when going over potholes in normal operation, avoiding possible damage and breakage of the front bridge.

Likewise, by means of the stabilizing system that is disclosed, it makes it possible for tractors that have this system built therein to avoid the "power bounce" that is normally produced, when tractors pull farming implements, and that due to the force exerted, the front bridge tends to rise reducing the front drive.

Moreover, by means of the stabilizing system that is disclosed, it makes it possible for tractors that include this system, to move forward smoothly in their normal operation, preventing that with an increase of speed the front bridge moves forward abruptly as it regularly happens. On some occasions this causes the operator to reduce the speed in order to be able to move forward smoothly again.

### FIELD OF APPLICATION

The present specification describes a stabilizing system for tractors, which is useful for all types of tractors and which is especially useful in tractors with four-wheel drive for agricultural use and which have in the front part thereof a support for mounting inertia mass.

Likewise the stabilizing system is useful for any other type of vehicle wherein it is necessary or convenient to dampen vibrations.

Document EP0 387927 discloses a stabilizing system according to the preamble of claim 1.

### BACKGROUND OF THE INVENTION

As it is known, tractors, among which are those of four-wheel drive for agricultural use, have been manufactured without any dampening at all on the front bridge, and given that tractors basically operate on grounds and paths they go over potholes and hollows, in such a way that the force produced is transmitted to the front bridge, as knocks, which can cause damage and breakage of the front bridge.

On the other hand, in order to increase the drive of the front bridge, inertia mass has been mounted on the front part of tractors, for which purpose the tractor has a support integral to the frame thereof. The inertial mass is mounted on the support in accordance with the characteristics of the tractor, in other words, its weight and power.

In this way, the support integral to the frame of the tractor is comprised of one body, with a generally rectangular shape that on its top outside side has an upward projection, whereas the different masses mounted on it have a recess complementary with said projection. The masses rest on the top base of the mounting support adequately fastened.

Hence, the inertia mass is integral to the frame of the tractor and the inertia mass basically acts like a simple weight for the purpose of forcing the front bridge of the tractor to contact the ground and to improve the drive.

### DESCRIPTION OF THE INVENTION

The present specification describes a stabilizing system for tractors, preferably useful for 4-wheel drive tractors for agricultural use, and which, in the front part thereof, have a support for mounting an inertial mass, in such a way that the system comprises a first body that is fastened to the front support of the tractor, in whose first body, fastened to the front support of the tractor, a second body of inertial mass is connected by means of at least one rotating arm connected rotatably to the first body and at least one absorbing part connected rotatably to the first body and second support body.

Hence, in the normal operation of the tractor in the field the potholes that the tractor continuously goes over transmit force to the front bridge, in such a way that the force is absorbed by the inertial mass mounted on a second support body thereof, acting as a counterweight. This provides suitable stability, as well a more comfort to the driver's seat.

Likewise, the system provides the tractor with better drive in the front wheels with this advantage that this represents.

In a preferred embodiment of the invention, the rotating connection of the second support body of inertial mass to the first body fastened to the front support of the tractor is defined by a pair of arms and a pair of hydraulic cylinders, arranged in a side position. The system includes a closed hydraulic circuit calibrated to a specific pressure.

On the other hand, the rotating connection of the second support body of an inertial mass to the first body fastened to the front support of the tractor are defined by a pair of arms and a pair of springs in a second practical embodiment of the invention.

Logically, the elastic part that absorbs the oscillatory rotating movement of the second body supporting the inertial mass can be any other one that carries out this very same function, such as, for example, some pneumatic cylinders, some springs or the like.

In order to complete the description that is going to be made hereinafter and in order to provide a better understanding of the characteristics of the invention, a set of drawings, in whose figures the most characteristic details of the invention are represented in an illustrative and non-restrictive manner, is attached to the present specification.

### BRIEF DESCRIPTION OF THE DRAWINGS

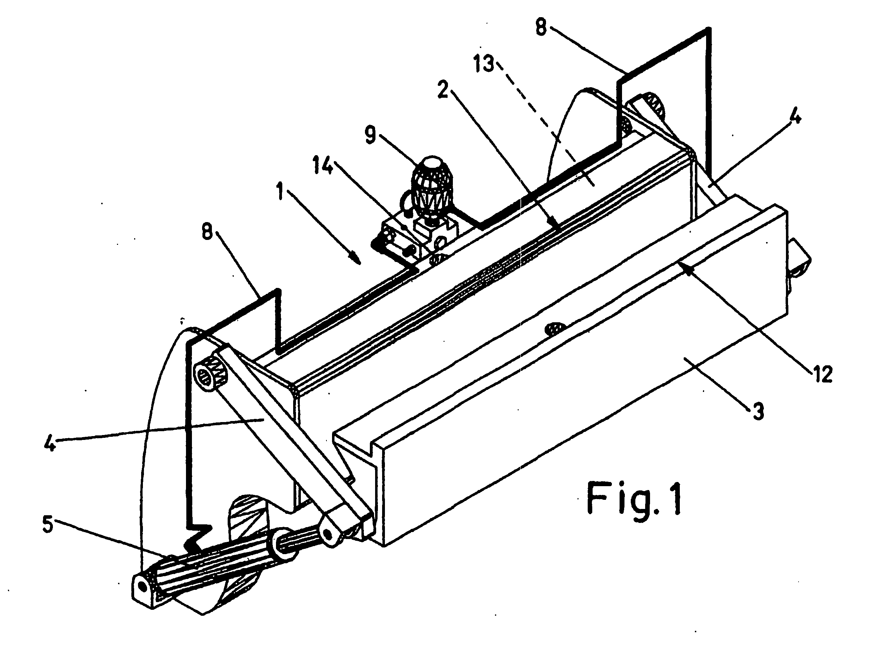

Figure 1 is a front perspective view of the stabilizing system for tractors, wherein one can see how the second support body of inertial mass is rotatably connected, by means of a pair of arms and a pair of cylinders, adequately calibrated, to a first body that is fastened to a support integral to the front part of the tractor.

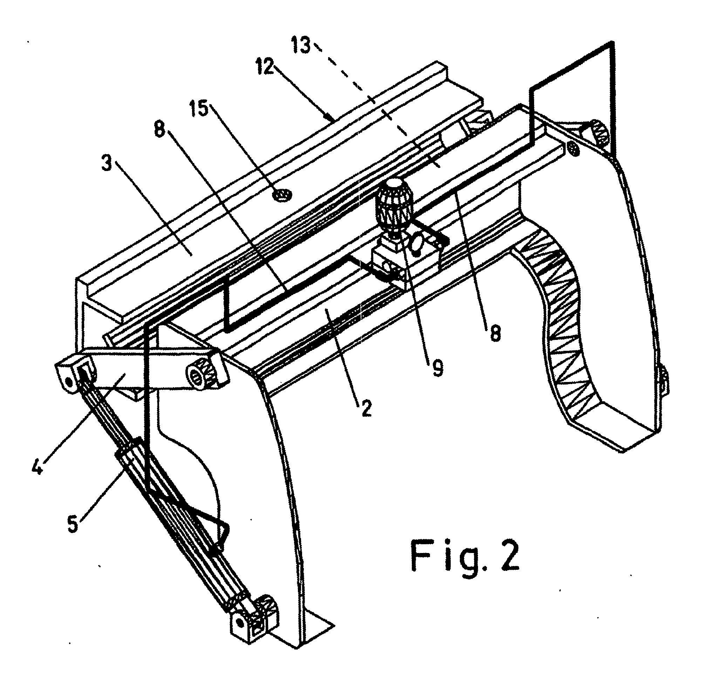

Figure 2 is a rear perspective view of the stabilizing system for tractors, wherein one can see the positioning area of the front support of the tractor between the side sheets.
Figure 3 is a view, according to a cross section, of the positioning of the first body, comprising the stabilizing system, mounted on the front support of the tractor, wherein one can see the top projection thereof of the free outside side.
Figure 4 is a view, according to a cross section, of the positioning of an inertial mass mounted on the second body of the support, comprising the stabilizing system, wherein one can see the recess defined in the inertial mass, arranged on the support surface on the second support body.

### DESCRIPTION OF A PREFERRED EMBODIMENT

In view of the commented figures and according to the numbering used, we can see how the stabilizing system (1) for tractors is comprised of a first body (2) that is fastened to the conventional front support (6) of the corresponding tractor and by a second support body (3) of an inertial mass (7). The second support body (3) is rotatably connected to the first body (2) by means of a pair of arms (4) and a pair of hydraulic cylinders (5).

Hence, the pair of arms (4) is rotatably connected, by one of its ends, to the first body (2), whereas by the other end the arms are integral to the second support body (3) of an inertial mass (7), whereas the pair of hydraulic cylinders (5) are rotatably connected to the first support body (2) as well as to the second support body (3).

In this way, the system includes a closed hydraulic circuit (8) provided with a storage battery (9), which is appropriately calibrated to a specific pressure.

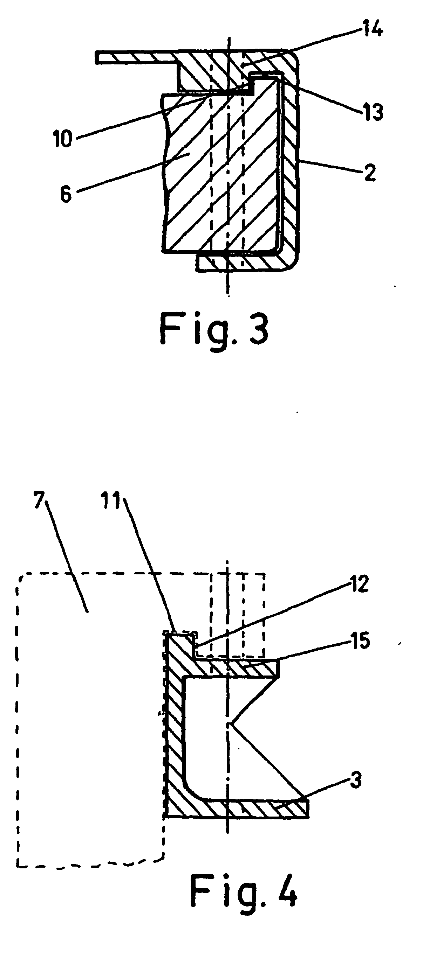

In order to have the best possible understanding of the stabilizing system that is disclosed, figure 3 of the drawings schematically represents the fastening of the first body (2) to the conventional support (6) of a tractor. One can see how the conventional support (6) has a projection (10) on its outside top end. The anchoring of the first body (2) to the support (6) is done by a bolt passing through the hole (14).

On the other hand, figure 4 of the drawings shows how an inertial mass (7) is conventionally mounted on the second support body (3) comprising the stabilizing system (1). One can also see how the inertial mass (7) has a recess (11), in whose recess (11) a projection (12) of the outside top end of the second support body (3) of the inertial mass fits. A bolt that will collaborate in the fastening of the inertial mass (7) to the second support body (3), comprising the stabilizing system (1), passes through the hole (15).

From what has been indicated above, we can determine that the inertial mass (7) is conventionally mounted on the support (6) integral to the corresponding tractor. The projection (10) of the support (6) fits in the recess (11) of the inertial mass (7), the inertial mass (7) being integral to the support (6). The inertial mass is defined by a series of bodies, of an identical structure, mounting a variable number in accordance with the weight that is to be mounted.

In accordance with the stabilizing system (1) that is described and claimed, when the tractor that includes the stabilizing system (1) does normal work or simply operates, when it goes over a pothole or hollow, the force that is transmitted is absorbed by the inertial mass (7) without affecting the operation thereof, in such a way that the second body (3) of the support of the inertial mass (7) oscillates. Its movement is absorbed by the pair of hydraulic cylinders (5) calibrated to a predetermined pressure.

In a practical embodiment of the invention the pair of hydraulic cylinders (5) could be replaced by a pair of springs, which will carry out their same function and if the case may be, the hydraulic circuit (8) would not be necessary.

Likewise, the pair of hydraulic cylinders (5) could also be replaced by other means that carry out their same function, such as for example, some pneumatic cylinders or some springs.

Moreover, by means of the stabilizing system (1) that is disclosed, the tractor that includes it can operate at a faster speed without this affecting its smooth forward movement.

In this same way, by means of the stabilizing system (1) that is disclosed, the power bounce is avoided in the tractor that includes the system, given that the inertial mass absorbs the force transmitted. The fact that the drive of the front bridge of the tractor increases as a result of the inertial mass being farther away from the front shaft, thus increasing the moment of inertia, collaborates with this absorption.

Logically, and as it has been indicated, the present stabilizing system is useful in any other type of vehicle or machinery which requires the dampening of the vibrations transmitted during normal working or simple operation thereof or wherein it is convenient to dampen such vibrations.

## Claims

1. Stabilizing system for tractors, being useful, preferably for tractors with four-wheel drive for agricultural use, and which, in their front part have a support for mounting inertial mass, the stabilizing system (1) comprises a first body (2) that is fastened to the front support (6) of the tractor, to whose first body (2) fastened to the front support (6) of the tractor a second body (3) is connected, by means of at least one rotating arm (4) rotatably connected to the first body (2) and at least one absorbing part (5) rotatably connected to the first body (2) and second body (3), **characterized in that** said second body (3) is a support body (3) of an inertial mass (7).

2. Stabilizing system for tractors, according to claim 1, **characterized in that** the rotating connection of the second support body (3) of an inertial mass (7) to the first body (2) fastened to the front support (6) of the tractor, is defined by a pair of arms (4) and a pair of hydraulic cylinders (5), arranged in a side position, the system including a closed hydraulic circuit (8) calibrated to a specific pressure.

3. Stabilizing system for tractors, according to claim 1, **characterized in that** the rotating connection of the second support body (3) of an inertial mass (7) to the first body (2) fastened to the front support (6) of the tractor, is defined by a pair of arms and a pair of springs.

## Patentansprüche

1. Stabilisierungssystem für Traktoren, welches vorzugsweise für Traktoren mit Allradantrieb zur Verwendung in der Landwirtschaft geeignet ist, die in ihrem vorderen Teil einen Träger zur Anbringung einer Trägheits-Masse aufweisen, wobei das Stabilisierungssystem (1) einen ersten Körper (2) aufweist, der am vorderen Träger (6) des Traktors befestigt ist, wobei mit dessen erstem, am vorderen Träger (6) des Traktors befestigten Körper (2) ein zweiter Körper (3) mit Hilfe mindestens eines rotierenden Arms (4), welcher drehbar mit dem ersten Körper (2) verbunden ist, und mit Hilfe mindestens eines absorbierenden Teils (5) verbunden ist, der drehbar mit dem ersten Körper (2) und dem zweiten Körper (3) verbunden ist, **dadurch gekennzeichnet, dass** der zweite Körper (3) ein Tragkörper (3) einer Trägheits-Masse (7) ist.

2. Stabilisierungssystem für Traktoren nach Anspruch 1, **dadurch gekennzeichnet, dass** die Drehverbindung des zweiten Tragkörpers (3) einer Trägheits-Masse (7) mit dem ersten, am vorderen Träger (6) des Traktors befestigten Körper (2) durch ein Paar Arme (4) und ein Paar Hydraulikzylinder (5), die in einer seitlichen Position angeordnet sind, definiert ist, wobei das System einen geschlossenen Hydraulikkreis (8) aufweist, der auf einen bestimmten Druck kalibriert ist.

3. Stabilisierungssystem für Traktoren nach Anspruch 1, **dadurch gekennzeichnet, dass** die Drehverbindung des zweiten Tragkörpers (3) einer Trägheits-Masse (7) mit dem ersten, am vorderen Träger (6) des Traktors befestigten Körper (2) durch ein Paar Arme und ein Paar Federn definiert ist.

## Revendications

1. Système de stabilisation pour tracteurs, utile de préférence pour tracteurs à quatre roues motrices à usage agricole, et qui ont dans leur partie avant un support pour le montage d'une masse inertielle, le système de stabilisation (1) comprenant un premier corps (2) qui est fixé au support avant (6) du tracteur, auquel premier corps (2) fixé au support avant (6) du tracteur est connecté un deuxième corps (3) d'une masse inertielle (7), à l'aide d'au moins un bras rotatif (4) connecté de manière permettant la rotation au premier corps (2) et au moins une partie d'absorption (5) connectée de manière permettant la rotation au premier corps (2) et au deuxième corps (3), **caractérisé en ce que** ledit deuxième corps (3) est un corps de support (3).

2. Système de stabilisation pour tracteurs suivant la revendication 1, **caractérisé en ce que** la connexion de rotation du deuxième corps de support (3) d'une masse inertielle (7) au premier corps (2), fixé au support avant (6) du tracteur, est définie par une paire de bras (4) et une paire de vérins hydrauliques (5), disposés en position latérale, le système incluant un circuit hydraulique fermé (8) calibré à une pression spécifique.

3. Système de stabilisation pour tracteurs suivant la revendication 1, **caractérisé en ce que** la connexion de rotation du deuxième corps de support (3) d'une masse inertielle (7) au premier corps (2), fixé au support avant (6) du tracteur, est définie par une paire de bras et une paire de ressorts.
